Europäisches Patentamt

European Patent Office

Office européen des brevets

(11) Veröffentlichungsnummer : **0 051 800**
**B1**

(12) **EUROPÄISCHE PATENTSCHRIFT**

(45) Veröffentlichungstag der Patentschrift :
26.06.85

(21) Anmeldenummer : 81109094.3

(22) Anmeldetag : 28.10.81

(51) Int. Cl.⁴ : **B 60 T  8/32**, B 60 T  8/40, B 60 T  8/64

(54) **Antiblockiervorrichtung.**

(30) Priorität : 11.11.80 CH 8349/80

(43) Veröffentlichungstag der Anmeldung :
19.05.82 Patentblatt 82/20

(45) Bekanntmachung des Hinweises auf die Patenterteilung : 26.06.85 Patentblatt 85/26

(84) Benannte Vertragsstaaten :
DE FR GB IT SE

(56) Entgegenhaltungen :
DE-A- 2 825 480
FR-A- 2 189 238

(73) Patentinhaber : **ALFRED TEVES GmbH**
**Guerickestrasse 7 Postfach 90 01 20**
**D-6000 Frankfurt am Main (DE)**

(72) Erfinder : **Widmer, Max**
**Neuweg 71**
**CH-8222 Beringen (CH)**

## Beschreibung

Die Erfindung betrifft eine Antiblockiervorrichtung für ein oder mehrere Fahrzeugräder eines Kraftfahrzeuges, bei der im Blockierfall mittels Pumpenkolben Bremsflüssigkeit vom Rad- zum Hauptbremszylinder zurückgefördert wird, wobei alle Pumpenkolben gemeinsam von einem einzigen Exzenter antreibbar sind (siehe FR-A-2 189 238).

Es sind Antiblockiervorrichtungen bekannt, bei denen in einer vom Haupt- zum Radbremszylinder führenden Hauptbremsleitung ein Steuerventil angeordnet ist, welches zwei Stellungen aufweist. In einer ersten Stellung ist ein freier Durchgang des Bremsmediums in beiden Richtungen, in der zweiten Stellung ist nur mehr der Rückfluß von Rad- zum Hauptbremszylinder möglich. Im Blockierfall wird mittels einer Pumpe das Bremsmedium zur Druckverminderung im Radbremszylinder in Richtung auf den Hauptbremszylinder gepumpt. Der Weg, den das Bremsmedium dabei nimmt, ist je nach Bauart verschieden. Es kann der gleiche Weg sein, den das Bremsmittel vom Haupt- zum Radbremszylinder eingeschlagen hat ; es kann eine Umgehungsleitung des Steuerventils sein, welche zwei in Richtung auf den Hauptzylinder hin öffnende Rückschlagventile mit der Pumpe zwischen ihnen aufweist, wobei dieser Weg zusätzlich vor dem ersten Rückschlagventil noch ein Entspannungsgefäß aufweisen kann und daher von der Hauptbremsleitung durch ein weiteres Ventil abschließbar sein muß.

Derartige Systeme haben zunächst den Nachteil gemeinsam, daß für jedes zu regelnde Rad eine separate Pumpe mit einem entsprechenden Antrieb vorhanden sein muß.

Es ist daher Aufgabe der Erfindung, eine baulich einfache Antiblockiervorrichtung der eingangs genannten Gattung zu schaffen, bei der eine Verminderung der Leistungsaufnahme des Pumpenantriebs eintritt.

Erfindungsgemäß ist diese Aufgabe dadurch gelöst, daß die Pumpenkolben mittels Kupplungseinrichtungen mit dem Exzenter in Kontakt bringbar sind, wobei jeder Kolben mit dem Exzenter nur während der Zeit in Kontakt bringbar ist, in der der Bremsmitteldruck des Rades vermindert werden soll, in dessen Regelkreis dieser Kolben liegt. Gegenüber bekannten Antiblockierregelanlagen ist es durch eine derartige Ausgestaltung möglich, den Antrieb der Pumpen hinsichtlich der Leistung geringer zu dimensionieren, da es unwahrscheinlich ist, daß an allen Fahrzeugrädern gleichzeitig kritische Schlupfwerte auftreten. Dies führt un- mittelbar zu einer Kosten- und Gewichtsersparnis der Antiblockierregelanlage.

Zu einer vorteilhaften und zweckmäßigen Ausgestaltung des Erfindungsgegenstandes gelangt man bei einem vierrädrigen Fahrzeug mit einer individuellen Bremsdruckregelung in jeder Radbremse dadurch, daß vier Pumpenkolben im Winkelabstand von 90° um den Exzenter herum angeordnet sind. Ferner ist es zweckmäßig, wenn alle Pumpenkolben sowie deren Bewegungsbahnen in einer gemeinsamen, mit der Rotationsebene des Exzenters zusammenfallenden Ebene angeordnet sind.

Zu einer weiter vereinfachten Antiblockiervorrichtung gelangt man, wenn bei einem vierrädrigen Fahrzeug, bei dem die beiden Vorderräder einzeln und die Hinterräder gemeinsam geregelt werden, die drei zur Regelung notwendigen Modulatoren in einem Winkelabstand von 120° um den Exzenter herum angeordnet sind. Bei einer derartigen Wahl der Winkelabstände, die entweder 90 oder 120° beträgt, erreicht man eine weitgehend gleichmäßige Kraftbeaufschlagung des Exzenters.

Die Erfindung wird im Folgenden an Hand der Zeichnung näher erläutert.

Es zeigen :

Figur 1 einen Längsschnitt durch zwei diametral angeordnete Modulatoren zur Variation des Bremsmitteldrucks in einem Radbremszylinder, und

Figur 2 die erfindungsgemässe Verbindung von vier Modulatoren mit gemeinsamem Antrieb mittels eines zentralen Exzenters in einem zur Fig. 1 normal verlaufenden Schnitt.

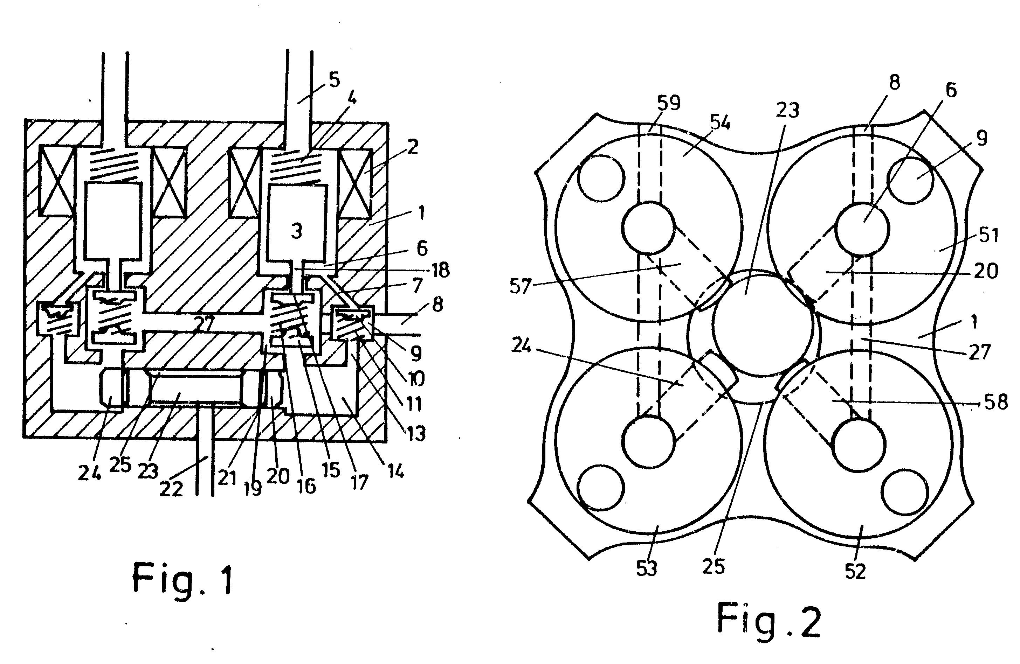

Die Fig. 1 zeigt einen senkrechten Schnitt durch die erfindungsgemässe Antiblockiereinrichtung, wobei in einem Gehäuse 1 zwei diametral gegenüberliegende von vier Bremsmodulatoren symmetrisch zueinander angeordnet sind. Die einzelnen Bauteile und nachfolgend die Funktion der Modulatoren werden an Hand eines einzigen Modulators beschrieben und sind für alle anderen in gleicher Weise gültig.

In einer Bohrung 6 des Gehäuses 1 befindet sich ein Anker 3 eines Elektromagneten 2, welcher Anker mittels einer Feder 4 im Sinne der Zeichnung nach unten und durch Erregen des Elektromagneten mit einer, die Kraft der Feder übersteigenden Kraft nach oben gespannt wird.

Der Anker 3 weist einen Fortsatz 18 auf, welcher, wenn der Anker durch die Feder 4 nach unten gespannt wird, ein in einer Bohrung 19 angeordnetes Rückschlagventil 17 welches in die Richtung der Bewegung des Fortsatzes 18 öffnet zwangsweise offen hält. Direkt gegenüber dem Rückschlagventil 17 ist ein entgegengerichtetes zweites Rückschlagventil 15 angeordnet, wobei beide Rückschlagventile 15 und 17 von ein und derselben Feder 16 beaufschlagt werden. Von der Bohrung 6 führt eine Leitung 7 zu einem weiteren in einer Bohrung 9 sitzenden von einer Feder 11 beaufschlagten Rückschlagventil 10, welches so angeordnet ist, dass jederzeit der Durchgang von der Bohrung 6 zur Bohrung 9 möglich ist.

Die Bohrungen 9 und 19 münden in einen Raum 14, dessen Volumen mittels eines Pumpenkolbens 20 periodisch vergrösserbar und dazwischen wieder auf seine ursprüngliche Grösse zurückbringbar ist.

Die Bohrung 19 ist ferner zwischen den Rückschlagventilen 15 und 17 mit einer Verbindungsleitung 27 verbunden, die ihrerseits mit der vom Hauptbremszylinder kommenden Bremsleitung 8 in Verbindung steht. Am anderen Ende führt die Leitung 5 von der Bohrung 6 zum Radbremszylinder.

Der im selben Gehäuse symmetrisch zum beschriebenen Modulator angeordnete zweite Modulator weist einen Pumpenkolben 24 auf, wobei beide Kolben 20 und 24 durch einen Exzenter 23 über eine Welle 22 angetrieben werden, und daher gleichzeitig nach links oder nach rechts geführt werden. Hierbei bewegen sie sich in einer Bohrung 25 gegen die sie mittels Ringdichtungen 21 abgedichtet sind.

Die Funktion des beschriebenen Modulators ist die folgende :

Im Normalfall wenn kein Blockiersignal von den Radsensoren her erfolgt, ist der Elektromagnet 2 stromlos und der Anker 3 wird durch die Feder 4 in die untere Stellung gedrückt. Dadurch ist das Rückschlagventil 17 zwangsweise offen und Bremsflüssigkeit kann über die Leitungen 8 und 27 durch das offene Ventil 17 hindurch in die Bohrung 6 und weiter durch die Leitung 5 zum Radbremszylinder fliessen und auch zurück. Hierdurch wird ein normales Bremsen und Entspannen ermöglicht.

Bei Eintritt von Blockieren eines Rades spricht dessen Sensor an und über eine elektrische Steuereinrichtung wird einerseits der Elektromagnet 2 erregt und gleichzeitig wird der Exzenter 23 von der angetriebenen Welle 22 her in Rotation versetzt, so dass die Kolben 20 und 24 zu pumpen beginnen. Durch den Elektromagneten 2 wird der Anker 3 hochgezogen und das Ventil 17 unter dem Druck der Feder 16 auf seinen Sitz gedrückt, so dass der Durchgang des Bremsmittels vom Haupt- zum Radbremszylinder unterbrochen ist. Wird nun der Kolben 20 nach links gedrückt, so wird über das sich öffnende Rückschlagventil 10 Bremsflüssigkeit aus der Bohrung 6 in den sich vergrössernden Raum 14 nachfliessen, da das Rückschlagventil 15 durch die Feder 16 und den im Raum 14 entstehenden Unterdruck (im Vergleich zur Bohrung 6) geschlossen ist. Bei der Rückbewegung des Kolbens 20 schliesst sich das Ventil 10 und dafür öffnet das Ventil 15, wobei die Bremsflüssigkeit bei geschlossenem Ventil 17 in die zum Hauptbremszylinder führenden Leitungen 27 und 8 gedrückt wird. Auf diese Weise wird der Druck im Radbremszylinder vermindert und das Rad bekommt wieder besseren Kontakt mit der Strasse.

In der Fig. 2 ist die Art und Weise dargestellt, wie in einem gemeinsamen Gehäuse die vier Modulatoren 51, 52, 53 und 54, von denen jeder einem Rad eines vierrädrigem Fahrzeugs zugeordnet ist, angeordnet sind, um die Kolben 20, 24, 57 und 58 mittels eines einzigen Exzenters und in der Folge davon mittels eines einzigen nicht dargestellten Motors anzutreiben. Hierzu sind die vier Modulatoren 51-54 rund um den in der Bohrung 25 laufenden Exzenter 23 herum derart angeordnet, dass die Kolben aller Modulatoren auf den Exzenter hin gerichtet sind. Durch Rotation des Exzenters werden die Kolben der Reihe nach in Richtung auf die Bohrungen 6 gedrückt worauf sie hernach unter dem Druck des Bremsmittels gegen den Exzenter gespannt und wieder in Richtung auf das gemeinsame Zentrum bewegt werden.

Je zwei Modulatoren sind mittels einer Verbindungsleitung 27 verbunden, und von den Modulatoren 51 und 54 führen zwei Leitungen 8 bzw. 59 heraus, die mit dem nicht dargestellten Hauptbremszylinder verbunden sind.

Bei Antiblockierregelungen mit einer Haltephase, in der der Bremsmitteldruck trotz Blockiersignal zeitweise konstant gehalten werden soll, sind Kupplungseinrichtungen vorhanden, welche die Kolben sinnvollerweise nur dann mit dem Exzenter in Kontakt bringen, wenn der Bremsmitteldruck vermindert werden soll.

Bei einem vierrädrigen Fahrzeug mit einzeln geregelten Vorder- und gemeinsam geregelten Hinterrädern können die drei Modulatoren im Abstand von 120° um den Exzenter herum angeordnet sein.

## Patentansprüche

1. Antiblockiervorrichtung für ein oder mehrere Fahrzeugräder eines Kraftfahrzeuges, bei der im Blockierfall mittels Pumpenkolben Bremflüssigkeit vom Rad- zum Hauptbremszylinder zurückgefördert wird, wobei alle Pumpenkolben gemeinsam von einem einzigen Exzenter antreibbar sind, dadurch gekennzeichnet, daß die Pumpenkolben (20, 24, 57, 58) mittels Kupplungseinrichtungen mit dem Exzenter (23) in Kontakt bringbar sind, wobei jeder Kolben (20, 24, 57, 58) mit den Exzenter (23) nur während der Zeit in Kontakt bringbar ist, in der ein Bremsmitteldruck des Rades vermindert werden soll, in dessen Regelkreis dieser Kolben liegt.

2. Antiblockiervorrichtung nach Anspruch 1, für ein vierrädriges Kraftfahrzeug, wobei jedes Rad einzeln geregelt wird, dadurch gekennzeichnet, daß die vier Pumpenkolben (20, 24, 57, 58) im Abstand von 90° um den Exzenter (23) herum angeordnet sind.

3. Antiblockiervorrichtung nach Anspruch 1 oder 2, dadurch gekennzeichnet, daß alle Pumpenkolben (20, 24, 57, 58) sowie deren Bewegungsbahnen in einer gemeinsamen, mit der Rotationsebene des Exzenters (23) zusammenfallenden Ebene angeordnet sind.

4. Antiblockiervorrichtung nach Anspruch 1, dadurch gekennzeichnet, daß bei einem vierrädrigem Fahrzeug, bei dem die beiden Vorderräder einzeln und die Hinterräder gemeinsam geregelt werden, die drei zur Regelung notwendigen Modulatoren im Abstand von 120° um den Exzenter (23) herum angeordnet sind.

## Claims

1. Anti-locking device for one or more vehicle wheels of a motor vehicle in which device, in the event of locking, brake fluid is forced back by means of pump pistons from the wheel brake cylinder to the master brake cylinder, all the pump pistons being drivable jointly by a single eccentric, characterised in that the pump pistons (20, 24, 57, 58) can be brought into contact with the eccentric (23) by means of coupling devices, each piston (20, 24, 57, 58) being bringable into contact with the eccentric (23) only during the time in which a pressure of the brake medium is to be reduced for the wheel in whose control circuit this piston is situated.

2. Anti-locking device according to claim 1, for a four-wheel motor vehicle in which each wheel is individually controlled, characterised in that the four pump pistons (20, 24, 57, 58) are arranged around the eccentric (23) with a spacing of 90°.

3. Anti-locking device according to claim 1 or 2, characterised in that all the pump pistons (20, 24, 57, 58) as well as their paths of motion are arranged in a common plane coinciding with the plane of rotation of the eccentric (23).

4. Anti-locking device according to claim 1, characterised in that, in the case of a four-wheeled vehicle in which the two front wheels are individually controlled and the rear wheels are jointly controlled, the three modulators necessary for control are arranged with a spacing of 120° around the eccentric (23).

## Revendications

1. Système antiblocage pour une ou plusieurs roues d'un véhicule automobile, dans lequel le liquide de freinage est refoulé par des pistons de pompe du cylindre de frein de roue au maître-cylindre de frein en cas de blocage, tous les pistons de pompe étant commandés par un seul excentrique, caractérisé en ce que les pistons de pompe (20, 24, 57, 58) peuvent être mis en contact avec l'excentrique (23) par des dispositifs d'accouplements, chaque piston (20, 24, 57, 58) pouvant n'être en contact avec l'excentrique (23) que pendant le temps où doit être réduite la pression du liquide de freinage de la roue au circuit de régulation de laquelle est associé ce piston.

2. Système antiblocage conforme à la revendication 1 pour une ou plusieurs roues d'un véhicule automobile à quatre roues, chaque roue faisant l'objet d'une régulation individuelle, caractérisé en ce que les quatre pistons de pompe (20, 24, 57, 57) sont disposés à intervalles de 90° autour de l'excentrique (23).

3. Système antiblocage conforme à la revendication 1 ou 2, caractérisé en ce que tous les pistons de pompe (20, 24, 57, 58) ainsi que leurs trajets de déplacement sont disposés selon un plan commun coïncidant avec le plan de rotation de l'excentrique (23).

4. Système antiblocage conforme à la revendication 1, caractérisé en ce que sur un véhicule à quatre roues dans lequel les deux roues avant font l'objet d'une régulation individuelle et les roues arrière d'une régulation commune, les trois modulateurs nécessaires à la régulation sont disposés à intervalles de 120° autour de l'excentrique (23).

Fig. 1

Fig. 2

0 051 800